(19) Europäisches Patentamt
European Patent Office
Office européen des brevets

(11) **EP 4 671 344 A1**

(12) **EUROPEAN PATENT APPLICATION**
published in accordance with Art. 153(4) EPC


(43) Date of publication:
**31.12.2025 Bulletin 2026/01**

(21) Application number: **24921263.0**

(22) Date of filing: **31.05.2024**

(51) International Patent Classification (IPC):
***C09K 8/66*** *(2006.01)* ***C09K 8/68*** *(2006.01)*
***C09K 8/506*** *(2006.01)* ***C01F 11/18*** *(2006.01)*

(52) Cooperative Patent Classification (CPC):
**C01F 11/18; C09K 8/506; C09K 8/66; C09K 8/68; C09K 8/88**

(86) International application number:
**PCT/CN2024/096767**

(87) International publication number:
**WO 2025/161225 (07.08.2025 Gazette 2025/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.02.2024 CN 202410154420**



(71) Applicants:
- **China Petroleum & Chemical Corporation Beijing 100728 (CN)**
- **Sinopec Southwest Oil & Gas Company Chengdu, Sichuan 610041 (CN)**

(72) Inventors:
- **GUO, Tonglou Chengdu, Sichuan 610041 (CN)**
- **XIONG, Liang Chengdu, Sichuan 610041 (CN)**
- **LEI, Wei Chengdu, Sichuan 610041 (CN)**
- **LAN, Lin Chengdu, Sichuan 610041 (CN)**
- **PAN, Baofeng Chengdu, Sichuan 610041 (CN)**
- **LIU, Yuan Chengdu, Sichuan 610041 (CN)**

(74) Representative: **Hoffmann Eitle Patent- und Rechtsanwälte PartmbB Arabellastraße 30 81925 München (DE)**


(54) **ACID-SOLUBLE NANO MATERIAL AND PREPARATION METHOD THEREFOR AND USE THEREOF, AND FRACTURING FLUID**


(57) An acid-soluble nano material and a preparation method therefor and a use thereof, and a fracturing fluid, relating to petrochemical technology. The hydrodynamic particle size $D_{10}$ of molecular aggregates of the acid-soluble nano material in water is 2-10 μm, $D_{50}$ is 8-31μm, and $D_{90}$ is 20-90μm. The preparation method for the acid-soluble nano material comprises: carrying out hydroxylation treatment on an unsaturated fatty monoacid, and carrying out a contact reaction between the hydroxylated unsaturated fatty monoacid and a nano carbonate raw material; and carrying out amination treatment on a product of the contact reaction, wherein the nano carbonate raw material contains a nano calcium carbonate raw material and/or a nano magnesium carbonate raw material. The acid-soluble nano material has the dissolution performance meeting fracturing construction requirements, can realize multi-size plugging in a compact reservoir and improve the plugging rate of a pore throat, and can enter the pore throat for adsorption and space occupation to reduce the retention amount of the fracturing fluid, thereby reducing damage to the reservoir.


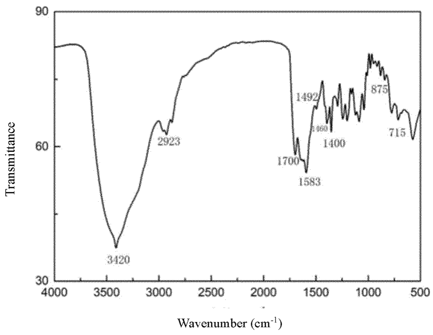

FIG. 1

EP 4 671 344 A1

## Description

### CROSS-REFERENCE TO RELATED APPLICATIONS

The application claims the benefit of the China patent application No. "202410154420.9", filed on February 2, 2024, the content of which is specifically and entirely incorporated herein by reference.

### TECHNICAL FIELD

The present invention relates to petrochemical technology, in particular to an acid-soluble nano material and preparation method therefor and use thereof, and a fracturing fluid containing the acid-soluble nano material as a plugging agent.

### BACKGROUND ART

Fracturing is one of the main measures to increase production during the development process of low permeability oil and gas reservoirs, it serves to apply a pressure and open cracks in the low permeability reservoirs to increase the discharge area and improve the oil and gas production. The temporary plugging and fracturing process relates to forming a filter cake by using a plugging agent in front of a high permeability formation or increasing the flow resistance of the high permeability formation to divert a working fluid into the low permeability formation.

Calcium carbonate, an acid soluble material, has been used in the product development of a plugging agent, it can be dissolved in an acid after playing a plugging role to promote flowback of the working fluid. Since calcium carbonate particles can only bridge and plug at pore throats or micro-fractures, the plugging effect is poor, and the acid dissolution rate of calcium carbonate is excessively high after it plays a temporary plugging role as a plugging agent, resulting in unstable working fluid system operation and poor flowback effect, thereby easily causing formation damage.

It is common practice in the prior art to modify the calcium carbonate particles as the plugging agent, although the modification operation can improve the plugging effect, there are still some formidable problems in use. For example, when the calcium carbonate particles or the modified calcium carbonate particles in the prior art are used for plugging, there are defects such as a small adsorption capacity, and a low plugging rate for multi-dimensional pore throats.

### SUMMARY OF THE INVENTION

The present invention aims to overcome the problems in the prior art, and provides an acid-soluble nanomaterial, a preparation method therefor and use thereof, and a fracturing fluid, the acid-soluble nanomaterial not only has the solubility that meets the requirements of fracturing operation, but also achieves multi-dimensional plugging of a tight reservoir and increases the plugging rate of pore throats, and has the capacity of adsorption and occupation after entering into the pore throats to decrease retention volume of the fracturing fluid and reduce damage on the reservoir.

To achieve the above objects, the first aspect of the present invention provides an acid-soluble nanomaterial, the hydrodynamic particle diameter $D_{10}$ of molecular aggregates of the acid-soluble nanomaterial in water is 2-10 $\mu$m, $D_{50}$ is 8-31$\mu$m, and $D_{90}$ is 20-90$\mu$m.

The second aspect of the present invention provides a preparation method for the acid-soluble nanomaterial, the method comprises the following steps: subjecting an unsaturated fatty monoacid to a hydroxylation treatment and then subjecting to a contact reaction with a nano-carbonate raw material; performing an amination treatment on a product of the contact reaction, wherein the nano-carbonate raw material comprises a nano-calcium carbonate raw material and/or a nano-magnesium carbonate raw material.

The third aspect of the present invention provides an use of the aforementioned acid-soluble nanomaterial or the acid-soluble nanomaterial produced with the aforementioned method in an oil extraction working fluid, preferably the use as a plugging agent in the fracturing fluid.

The fourth aspect of the present invention provides a fracturing fluid comprising the aforementioned acid-soluble nanomaterial or the acid-soluble nanomaterial produced with the aforementioned method.

Due to the aforementioned technical scheme, the present invention produces the favorable effects as follows: the acid-soluble nanomaterial provided by the invention has a specific hydrodynamic particle diameter of molecular aggregate in water, it can perform the multi-dimensional plugging in regard to the tight reservoirs, increase the plugging rate for the pore throats, and can enter into the pore throats to carry out adsorption and occupation, reduce the retention volume of the fracturing fluid, and decrease damage on the reservoirs by the thickener in a fracturing fluid. Further, the acid dissolution rate of the acid-soluble nanomaterial can meet the operation process requirements of tight reservoir, reduce damage on the formation after the plugging operation, effectively dissolve the acid-soluble nanomaterial through an acidification process, facilitate flowback of the working fluid, decrease the filtration loss of the fracturing fluid system, thereby solving the

problems of formation damage that can be easily caused by the conventional inorganic material plugging agents.

## BRIEF DESCRIPTION OF THE DRAWINGS

FIG. 1 illustrates an infrared spectrogram of an acid-soluble nanomaterial prepared in Example 1;
FIG. 2 shows a scanning electron microscope morphology image and an EDS spectrogram of the acid-soluble nanomaterial prepared in Example 1;
FIG. 3 shows a scanning electron microscope morphology image and an EDS spectrogram of the unmodified nano-calcium carbonate particles;
FIG. 4 is an observation photograph showing an optical microscope view of an aqueous solution of the acid-soluble nanomaterial prepared in Example 1;
FIG. 5 is an observation photograph showing an optical microscope view of the unmodified nano-calcium carbonate particles;
FIG. 6 is an observation photograph showing an optical microscope view of an aqueous solution of unmodified nano-calcium carbonate particles.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides an acid-soluble nanomaterial that has a hydrodynamic particle diameter $D_{10}$ of molecular aggregate in water is 2-10μm, the specific value may be 2μm, 4μm, 6μm, 8μm, 10μm, or a random value within the range consisting of any two numerical values mentioned above; a $D_{50}$ is 8-31μm, such as 8μm, 15μm, 20μm, 25μm, 31μm, or a random value within the range consisting of any two numerical values mentioned above; and a $D_{90}$ is 20-90μm, such as 20μm, 30μm, 40μm, 50μm, 60μm, 70μm, 80μm, 90μm, or a random value within the range consisting of any two numerical values mentioned above.

The present inventors have surprisingly discovered in the research and development process that the acid-soluble nanomaterial has a specific hydrodynamic particle diameter $D_{10}$, $D_{50}$, $D_{90}$ of molecular aggregate in water, the nanomaterial has desirable rock adsorption properties, it can perform the multi-dimensional plugging in regard to the tight reservoirs, enhance the plugging rate for the pore throats, and can enter into the pore throats to carry out adsorption and occupation, reduce the retention volume of the fracturing fluid, and decrease damage on the reservoirs; after the operation process of reservoirs, the nanomaterial can effectively dissolve the acid-soluble nanomaterial through an acidification process, facilitate flowback of the working fluid, decrease the filtration loss of the fracturing fluid system, thereby solving the problems of formation damage that can be easily caused by the conventional inorganic material plugging agents.

In the invention, the hydrodynamic particle diameter of molecular aggregate of the acid-soluble nanomaterial in water refers to the apparent particle diameter of molecular aggregate formed by aggregation of the acid-soluble nanomaterial in water, and the test method comprises: performing a wet method measurement on the acid-soluble nanomaterial by using a Fritsch 22 type laser particle size analyzer, opening the test software MaScontrol and clicking the "washing" and "calibration" programs to wash and calibrate the instrument, then performing measurements; preparing the test sample, loading the sample with a medicine spoon into a funnel in batches, dispersing the sample using clean water and ultrasonic wave, performing three sets of parallel data tests automatically after completion of the loading process, outputting the kinetic particle size distribution report of the test if the error is not more than 5%, cleaning and drying the instrument after completion of the test process, turning off the instrument. $D_{10}$, $D_{20}$, $D_{50}$, $D_{70}$ and $D_{90}$ indicate the corresponding particle size (manually accumulating the percentages of all particle size in front of or behind the particle size) when a cumulative particle size distribution of the samples reaches 10%, 20%, 50%, 70% and 90%, respectively; its physical meaning is that the number of particles having a particle size smaller than the particle size is 10%, 20%, 50%, 70% and 90% of all the particles.

According to the present invention, the acid-soluble nanomaterial preferably has an acid solubility within the range of 50-80%, more preferably within the range of 65-80%, when dissolved in a hydrochloric acid solution having a concentration of 15wt% at 90°C for 1 hour, and an acid solubility of 90% or more when dissolved in the hydrochloric acid solution at 90°C for 2 hours. Under the circumstance, the acid-soluble nanomaterial not only ensures flowback of working fluid after the petroleum extraction operation, but also has an acid dissolution rate better satisfying the time requirement of the operation procedure following the fracturing process, and the acid dissolution time can meet the requirement of the

tight reservoir operation procedure to reduce the damage on formation after the plugging operation.

In the invention, the specific test process of acid dissolution rate is as follows: putting 2g of an acid-soluble nanomaterial in an oven and drying it to a constant weight, it is denoted as $m_1$, adding the dried acid-soluble nanomaterial into 250mL of hydrochloric acid solution having a concentration of 15wt%, stirring uniformly, applying a cap at a constant temperature of 90°C for 1h or 2h, stopping the heating process, taking out and then filtering and drying till a constant weight, weighing the residue, it is denoted as $m_2$, and then calculating the acid dissolution rate S according to the following formula (I):

$$S = (m_1-m_2)/m_1 \times 100\% \qquad \text{formula (I),}$$

wherein S denotes an acid dissolution rate (%); $m_1$ denotes the sample mass (g); and $m_2$ denotes the residue mass (g).

According to the invention, it is preferred that the hydrodynamic particle diameter $D_{20}$ of molecular aggregates of the acid-soluble nanomaterial in water is 4-22$\mu$m and $D_{70}$ is 12-70$\mu$m. The inventors have found that under the preferred embodiment, the filtration loss can be effectively reduced during the fracturing process, the multi-dimensional plugging of reservoirs with different sizes can be achieved during the fracturing process, the acid-soluble nanomaterial has a high matching degree with pore throats of the dense sandstone reservoir, and can meet more technical requirements for fracturing and modifying the low-permeability dense gas reservoirs.

In the invention, the acid-soluble nanomaterial may be any one of the nanoscale acid-soluble materials capable of forming said the specific hydrodynamic particle diameter of molecular aggregate in water, such as a modified nano-calcium carbonate material, a modified nano-magnesium carbonate material. Preferably, the acid-soluble nanomaterial comprises carbonate particles and a modifying agent attached to the surface of said carbonate particles, wherein the carbonate particles comprise calcium carbonate particles and/or magnesium carbonate particles, wherein the modifying agent comprises a derivative formed by substituting at least one hydroxyl group of a multihydroxy fatty acid with an amino group-containing substituent.

The present invention modifies nano-calcium carbonate raw material and/or nano-magnesium carbonate raw material such that it has a specific hydrodynamic particle diameter $D_{10}$, $D_{50}$, $D_{90}$ of molecular aggregate in water, thereby obtaining a modified nano-calcium carbonate material and/or a modified nano-magnesium carbonate material, not only the acid dissolution time can meet the requirements of the operation flow for tight reservoirs, reduce damage on the formation after the plugging operation, effectively dissolve the modified nano-calcium carbonate material and/or modified nano-magnesium carbonate material using an acidification process, facilitate flowback of working fluids, reduce the filtration loss of the fracturing fluid system, and exhibit desirable rock adsorption properties, achieve multi-dimensional plugging of a tight reservoir and increase the plugging rate of pore throats, and has the capacity of adsorption and occupation after entering into the pore throats to decrease retention volume of the fracturing fluid and reduce damage on the reservoir. Further preferably, the carbonate particles are calcium carbonate particles.

Wherein the carboxyl groups contained in the modifying agent are capable of forming a stably linked chemical bonds with the calcium carbonate and/or magnesium carbonate, which are attached on the surface of the calcium carbonate particles and/or magnesium carbonate particles, the modifying agent allows that the acid-soluble nanomaterial belongs to organic/inorganic nanocomposites, in combination with the bridging function of inorganic nanoparticles and deformation property of organic particles, can form specific hydrodynamic particle diameter of molecular aggregates in water, have desirable dispersion property and plugging performance for pore throats; when the acid-soluble nanomaterial is used in the oil extraction working fluid system, it can be used as the excellent plugging agent for performing the multi-dimensional plugging of the tight reservoirs, improve the plugging rate of pore throats, and has the capacity of adsorption and occupation after entering into the pore throats, such that plugging the formation is more successful, effectively improve the plugging rate during the temporary plugging and fracturing in the oil extraction, decrease retention volume of the fracturing fluid; in addition, the modifying agent on the surface of the calcium carbonate particles and/or magnesium carbonate particles of the acid-soluble nanomaterial can be hydrolyzed by the combined action of high temperature and acidic conditions to fall off and expose internally coated calcium carbonate particles and/or magnesium carbonate particles, the calcium carbonate particles and/or magnesium carbonate particles are further decomposed upon contacting with an acid, such that the material has both a suitable acid dissolution rate and an excellent acid solubility, after completion of the temporary plugging and fracturing operation, the acid-soluble nanomaterial can be effectively dissolved by an acidification process to promote flowback of the working fluid, reduce filtration loss during the fracturing process, and the acid dissolution rate and the acid dissolution time can meet the time requirements of operation flow after fracturing the tight reservoirs.

According to the invention, preferably, the acid-soluble nanomaterial has a retention volume reduction rate more than 4.5%, preferably more than 25% for a fracturing fluid having a retention volume of 12.5mg/g and comprising 99.7wt% of a solvent + 0.1wt% of a thickener + 0.1wt% of a cleanup additive + 0.1wt% of a clay stabilizer, to further reduce adsorption and damage to the reservoir by the working fluid system.

In order to verify the adsorption and occupation effect of the acid-soluble nanomaterial provided by the present invention on sandstone, thereby preventing acrylamide homopolymer in the fracturing fluid systems from entering the sandstone pores, it is discovered by testing the effect of the acid-soluble nanomaterial on the retention volume of acrylamide homopolymer fracturing fluid systems in reservoirs that the acid-soluble nanomaterial provided by the invention is able to adsorb on the fine pore throats in sandstone, preventing the adsorption of the polyacrylamide system, allowing more polyacrylamide to flow out and reducing the retention volume, thereby indicating that the acid-soluble nanomaterial can effectively increase the plugging rate of fracturing fluid to the pore throats.

The specific procedure of measuring an influence of the acid-soluble nanomaterial on the retention volume of acrylamide homopolymer system in the reservoir is as follows: initially grinding the sandstone sample into sandstone particles having a particle size of 0.21-0.30mm (70-50 mesh) and loading the sandstone particles into a sand-filled pipe, drying and weighing the sand-filled pipe rock core having a diameter of 2.5cm and a length of 15 cm; preparing the solution (anionic polyacrylamide solution with a concentration of 1,000mg/L), adding the acid-soluble nanomaterial provided by the invention and performing the displacement at a rate of 1mL/min for 5h respectively, measuring the concentration of the solution flowing out from the sample by the starch-chromium iodide method, and calculating the retention volume of polyacrylamide in the formation according to formula (II) by using the mass balance method;

$$Q = (\rho_0 V_0 - \rho_1 V_1) / W \text{ formula (II),}$$

retention volume of polyacrylamide in the rock core, mg/g;

$\rho_0$ denotes the concentration of injected polyacrylamide solution, mg/L; $V_0$ denotes the volume of injected polyacrylamide, mL; $\rho_1$ denotes the concentration of sample discharging from an outlet of rock core, mg/L; $V_1$ denotes the volume of sample discharging from an outlet of rock core, mL; W denotes the dry mass of rock core, g.

Wherein the retention volume reduction rate refers to the ratio of the change in retention volume before and after the addition of the acid-soluble nanomaterial provided by the present invention (the addition amount of the acid-soluble nanomaterial added is preferably 0.5-2wt%) into the fracturing fluid and the initial retention volume of the fracturing fluid, the calculation formula is as shown in formula (III):

$$\Delta Q = \frac{Q_0 - Q_1}{Q_0} \times 100\% \qquad \text{formula (III),}$$

in formula (III):

$\Delta Q$ denotes the retention volume reduction rate of said fracturing fluid, %;
$Q_0$ denotes the retention volume before the addition of the acid-soluble nanomaterial provided by the present invention into the fracturing fluid, mg/g;
$Q_1$ denotes the retention volume after the addition of the acid-soluble nanomaterial provided by the present invention into the fracturing fluid, mg/g.

In the present invention, the solvent of said fracturing fluid may be water, the thickener may be any substance that is capable of acting as a thickener in the fracturing fluid, the cleanup additive may be any substance that is capable of acting as a cleanup additive in the fracturing fluid, and the clay stabilizer may be any substance that is capable of acting as a clay stabilizer in the fracturing fluid. Exemplarily, the thickener is an acrylamide homopolymer and/or a copolymer of acrylamide and other monomer, the other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer. Further preferably, the acrylamide homopolymer has a molecular weight more than 18,000,000 and copolymer of acrylamide and other monomer has a molecular weight more than 18,000,000. The cleanup additive is polyoxyethylene amine ether and/or polyoxyethylene fatty alcohol ether. The polyoxyethylene amine ether is oleylamine polyoxyethylene ether and/or rosin amine polyoxyethylene ether; the polyoxyethylene fatty alcohol ether is at least one selected from the group consisting of polyoxyethylene dodecyl ether, polyoxyethylene tetradecyl ether, polyoxyethylene hexadecyl ether, and polyoxyethylene octadecyl ether. The clay stabilizer is a dimethylamine quaternary ammonium salt and/or a polyquaternium, preferably a polyquaternium-126.

In the present invention, the specific formulation of a fracturing fluid consisting of a solvent, a thickener, a cleanup additive, a clay stabilizer and having a retention volume of 12.5mg/g may be as follows: 99.7wt% of water + 0.1wt% of

acrylamide homopolymer with a relative molecular weight of 18,000,000 + 0.1wt% of a cleanup additive + 0.1wt% of a dimethylamine quaternary ammonium salt. A fracturing fluid meeting such condition may be, for example, a SPR series fracturing fluid product commercially available from Dongying Spring Petroleum Engineering Technology Co., Ltd., such as a fracturing fluid formed by mixing acrylamide homopolymer (thickener SPR-08), oleylamine polyoxyethylene ether (cleanup additive SPR-201), dimethylamine quaternary ammonium salt (clay stabilizer SPR-103) according to the above proportion.

According to the present invention, preferably, the modifier has a structural formula represented by formula (I) and a carbon chain length of 20 or more,

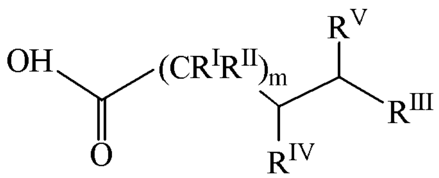

(I),

wherein $R^I$ and $R^{II}$ are each independently hydrogen or C1-C3 alkyl, such as hydrogen, methyl, ethyl, n-propyl, isopropyl; $R^{III}$ is hydrogen or C1-C20 alkyl (including straight chain alkyl, branched chain alkyl, cycloalkyl), the examples may be hydrogen, methyl, ethyl, n-propyl, isopropyl, n-butyl, n-pentyl, n-hexyl, n-heptyl, n-octyl; m is an integer of 0-20; one of $R^{IV}$ and $R^V$ is an amino-containing substituent and the other is hydroxyl, or both are amino-containing substituents; the amino-containing substituent may be amino, imino, nitrilo, or alkyl having an amino group, aromatic group having an amino group, and the like.

In the present invention, the morphology of the acid-soluble nanomaterial can be detected with the following steps: drying the acid-soluble nanomaterial by irradiation with infrared lamps, taking a small amount of the acid-soluble nanomaterial and placing it on a conductive adhesive tape disposed on a copper tray, lightly pressing it with a lintless paper to firmly adhere the sample particles, and removing the powder sample on the side of the copper tray; loading the sample in a device, vacuumizing, and performing the electrical conduction, and then implementing the morphology and elemental analysis on the sample powder by using a Quanta 250 scanning electron microscope. As shown in FIG. 1, compared to the calcium carbonate illustrated in FIG. 2, the acid-soluble nanomaterial (modified nano-calcium carbonate material) provided by the present invention is obviously attached with the modification units on the surface of particles.

According to the invention, preferably, the content of the carbon chain in the modifier is 5-15wt%, further preferably, the content of the amino group is 0.05-0.6wt%, based on the total amount of the acid-soluble nanomaterial. The inventors have discovered that the preferred embodiment can further reduce the filtration loss during the fracturing process and the retention volume of the fracturing fluid in pore throats.

In the invention, the contents of carbon and amino group can be determined by combining nuclear magnetic hydrogen spectroscopy, nuclear magnetic carbon spectroscopy and infrared detection, or can be measured by combining infrared detection and scanning electron microscope.

The second aspect of the present invention provides a preparation method for the acid-soluble nanomaterial, the method comprises the following steps: subjecting an unsaturated fatty monoacid to a hydroxylation treatment and then subjecting to a contact reaction with a nano-carbonate raw material; performing an amination treatment on a product of the contact reaction, wherein the nano-carbonate raw material comprises a nano-calcium carbonate raw material and/or a nano-magnesium carbonate raw material.

The present invention provides a preparation method for the acid-soluble nanomaterial, the produced acid-soluble nanomaterial not only has a specific hydrodynamic particle diameter of molecular aggregate in water to form desirable dispersion performance and rock adsorption property, significantly increases the multi-dimensional plugging rate during the operation process, can enter into the pore throats to carry out adsorption and occupation, reduce the retention volume of the fracturing fluid, and the acid dissolution rate can meet the requirements of the operation flow for tight reservoirs, and reduce damage on the formation after the plugging operations.

In the invention, the nano-calcium carbonate raw material and the nano-magnesium carbonate raw material have the nano-scale particle diameters, preferably 30-150nm, and are commercially available.

In the present invention, preferably, the unsaturated fatty monoacid has a structural formula represented by formula (II) and a carbon chain length of 20 or more,

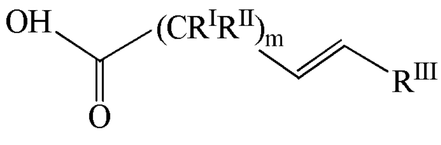

(II),

wherein $R^I$ and $R^{II}$ are each independently hydrogen or C1-C3 alkyl, $R^{III}$ is hydrogen or C1-C20 alkyl, and m is an integer of 0-20. For example, the unsaturated fatty monoacid may be docosa-13-enoic acid, hexacosa-7-enoic acid, pentacosa-9-enoic acid, tetracosa-20-enoic acid, octacosa-10-enoic acid, preferably hexacosa-7-enoic acid and/or docosa-13-enoic acid, further preferably docosa-13-enoic acid. The inventors have discovered that the preferred embodiment is conducive to further increasing the rock adsorbability of the acid-soluble nanomaterial and improving the plugging rate.

According to the present invention, it is preferred that the hydroxylation treatment process comprises: mixing the unsaturated fatty monoacid with a hydroxylation reagent and carrying out the reaction in the presence of a C1-C5 organic acid. The C1-C5 organic acid may be formic acid, acetic acid, propionic acid, butyric acid, pentanoic acid, preferably formic acid.

According to the invention, the hydroxylation reagent is preferably a peroxide, more preferably hydrogen peroxide. The inventors have found that the preferred embodiment is advantageous to promote the addition reaction of formic acid with monounsaturated fatty acids, and increase the reaction efficiency.

According to the present invention, it is preferred that the mixing reaction comprises: mixing the unsaturated fatty monoacid with a C1-C5 organic acid, then dropwise adding a hydroxylation reagent at the temperature condition of 30-35°C, further heating to 65-70°C and carrying out the reaction for 4-6 h. The inventors have discovered that the preferred embodiment is conducive to improving the synthesis efficiency of multihydroxy fatty acid.

According to the invention, the weight ratio of said unsaturated fatty monoacid, said C1-C5 organic acid and said hydroxylation reagent is (1-2) : (1-2) : 1. The inventors have found that under the preferred embodiment, it is favorable to increase the conversion rate of addition reaction between the hydroxylation reagent and the monounsaturated fatty acid.

In the invention, the water layer of the reaction liquid obtained by the mixed reaction can be removed by layering, the oil layer is washed by hot water to be neutral, a small amount of acetone is added to dissolve out the oil layer, and the water and the solvent are removed by rotary evaporation to obtain a first product (multihydroxy fatty acid).

According to the present invention, the weight ratio of said unsaturated fatty monomer following the hydroxylation treatment to said nano-carbon raw material is preferably 1: (4-8).

According to the present invention, preferably, the contact reaction conditions comprise: a temperature of 30-70°C, such as 30°C, 40°C, 50°C, 60°C, 70°C, or a random value within the range consisting of any two numerical values mentioned above; and a time of 0.5-1.5h, such as 0.5h, 0.7h, 0.9h, 1.1h, 1.3h, 1.5h, or a random value within the range consisting of any two numerical values mentioned above. The inventors have discovered that under the preferred embodiment, it is conducive to expediting the modification of calcium carbonate and/or magnesium carbonate by the multihydroxy fatty acid, and improving the reaction efficiency.

In the present invention, the contact reaction is performed in the presence of a solvent, for example, a nano-calcium carbonate raw material and/or a nano-magnesium carbonate raw material may be dispersed in anhydrous ethanol, the mixture and the first product may be stirred by shaking in an ultrasonic stirrer to perform the contact reaction, then filtering and drying the mixture to obtain a product of the contact reaction (a second product).

According to the present invention, preferably, the animation treatment process comprises: carrying out a first-stage reaction on the contact reaction product and an aromatic sulfonyl halide to obtain a third product, and then carrying out a second-stage reaction with diamine in the presence of a catalyst.

According to the invention, the aromatic sulfonyl halide may be benzene-containing sulfonyl chloride, benzene-containing sulfonyl fluoride, benzene-containing sulfonyl bromide and benzene-containing sulfonyl iodide; preferably, the aromatic sulfonyl halide is benzene-containing sulfonyl chloride, more preferably at least one selected from the group consisting of p-toluene sulfonyl chloride, p-ethylbenzene sulfonyl chloride, m-toluene sulfonyl chloride and m-ethylbenzene sulfonyl chloride; further preferred p-ethylbenzene sulfonyl chloride. The diamine is at least one selected from the group consisting of p-phenylene diamine, m-phenylene diamine, 4,4'-diamino diphenyl ether, 2,2'-bis (trifluoromethyl) diamino biphenyl and 4,4'-diamino diphenyl sulfone; more preferably p-phenylene diamine. The inventors have discovered that the preferred embodiment is conducive to modifying surface of the contact reaction product, and improving the plugging effect.

According to the present invention, preferably, the weight ratio of said aromatic sulfonyl halide to said contact reaction product is 1: (0.8-1.2).

According to the present invention, the first stage reaction preferably comprises: adding the contact reaction product into a solution containing the aromatic sulfonyl halide in batches. The inventors have discovered that under the preferred embodiment, it is advantageous to improve the reaction efficiency of the aromatic sulfonyl halide with the contact reaction product.

Further preferably, the solvent of the solution containing the aromatic sulfonyl halide is a strong alkali solution with a concentration of 20-30wt% or pyridine, the strong alkali is preferably sodium hydroxide and/or potassium hydroxide; the solvent for the solution containing the aromatic sulfonyl halide is preferably pyridine.

According to the invention, preferably, the conditions of the first stage reaction comprise: a temperature from -5°C to 5°C, such as -5°C, -3°C, -1°C, 0°C, 1°C, 3°C, 5°C, or a random value within the range consisting of any two numerical values mentioned above; and a time of 4-7h, specifically 4h, 5h, 6h, 7h, or a random value within the range consisting of any

two numerical values mentioned above. The inventors have discovered that the preferred embodiment is advantageous to improve the reaction efficiency.

Illustratively, the first stage reaction process comprises the following steps: dissolving aromatic sulfonyl halide in pyridine, stirring in ice bath, adding the product of contact reaction in small amount for several times, and carrying out the reacting for 4-7h.

According to the invention, the weight ratio of the first stage reaction product to the diamine is preferably (2.4-3) : 1. The inventors have found that under the preferred embodiment, it is advantageous to introduce an amino group on the surface of the third product, and increase the yield of acid-soluble nanomaterial.

According to the invention, preferably, the second stage reaction adopts a concentrated strong alkali solution as a reaction solvent, wherein the strong alkali is preferably sodium hydroxide and/or potassium hydroxide with a concentration of 20-30wt%.

According to the invention, the catalyst is preferably a phase transfer catalyst, more preferably tetrabutyl ammonium bromide and/or benzyltriethyl ammonium chloride. The inventors have found that under the preferred embodiment, it is advantageous to increase the conversion rate of the amino groups introduced on the surface of the first stage reaction product.

According to the present invention, preferably, the conditions of the second stage reaction comprise: using a strong alkali solution having a concentration of 20-30wt% as a reaction solvent, a temperature of 95-105°C, and a time of 7-12h. The inventors have discovered that the preferred embodiment is conducive to increasing the yield of the acid-soluble nanomaterial attached with the structural unit a.

The third aspect of the present invention provides an use of the aforementioned acid-soluble nanomaterial or the acid-soluble nanomaterial produced with the aforementioned method in an oil extraction working fluid.

In the invention, the oil extraction working fluid may be a fracturing fluid, a drilling fluid, a completion fluid or any other working fluid; preferably, the above-mentioned acid-soluble nanomaterial is used as a plugging agent in the fracturing fluid. It plays a role of the plugging agent during the on-site operation, has good dispersibility and rock adsorptivity, high plugging strength and desirable stability, and can enter the interior of pore throats for adsorption and occupation to reduce the retention volume of the fracturing fluid; after construction is finished, the acid-soluble nanomaterial can be dissolved by acidification based on the acid solubility of the acid-soluble nanomaterial, so that the residue content of the working solution is effectively reduced, the damage on the reservoir matrix is reduced; in addition, the filtration loss of the working fluid can be effectively reduced, the fracturing fluid is promoted to quickly flowback and discharge the reservoir, and the flowback efficiency of the working solution is improved.

The fourth aspect of the present invention provides a fracturing fluid comprising the aforementioned acid-soluble nanomaterial.

According to the invention, the acid-soluble nanomaterial is preferably contained in an amount of 0.5-2wt%, based on the total weight of the fracturing fluid. The inventors have discovered that the preferred embodiment is beneficial to desirably improving the plugging strength and stability, reducing the filtration loss of the fracturing fluid, and reducing the damage of the fracturing fluid on the formation.

According to the present invention, preferably, the fracturing fluid further comprises: 0.1-1wt% of a thickener, 0.1-1wt% of a cleanup additive, and 0.1-1wt% of a clay stabilizer, based on the total weight of said fracturing fluid, with the remainder being a solvent (e.g., water). The fracturing fluid provided by the invention is added with the acid-soluble nanomaterial provided by the invention on the basis of the conventional fracturing fluid system, so that the plugging rate can be obviously improved compared with the initial fracturing fluid system, and the flowback efficiency of the working fluid after the operation process is improved.

According to the present invention, preferably, the thickener is an acrylamide homopolymer and/or a copolymer of acrylamide and other monomer, wherein the other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer. Further preferably, the molecular weight of the acrylamide homopolymer is 18,000,000 or more, and the molecular weight of the copolymer of acrylamide and other monomer is 18,000,000 or more.

According to the invention, preferably, the cleanup additive is polyoxyethylene amine ether and/or polyoxyethylene fatty alcohol ether. Further preferably, the polyoxyethylene amine ether is oleylamine polyoxyethylene ether and/or rosin amine polyoxyethylene ether; the polyoxyethylene fatty alcohol ether is at least one selected from the group consisting of polyoxyethylene dodecyl ether, polyoxyethylene tetradecyl ether, polyoxyethylene hexadecyl ether, and polyoxyethylene octadecyl ether.

According to the present invention, the clay stabilizer is preferably a dimethylamine quaternary ammonium salt and/or a polyquaternium, and the polyquaternium is preferably polyquaternium-126.

The present invention will be described in detail below with reference to examples.

In the following examples, the nano-calcium carbonate raw material was purchased from Jiangsu Xianfeng Nanomaterials Technology Co., Ltd., with a product model XFI11-2 and a particle size of 50-100nm; the nano-magnesium carbonate raw material was purchased from Ningbo Lufei Nanotechnology Co., Ltd., with the CAS number 546-93-0 and a particle size of 50-80nm; the erucic acid (docosa-13-enoic acid) was purchased from Shanghai Aladdin Technology Co., Ltd., with the CAS number 112-86-7; hexacosa-7-enoic acid was purchased from Shanghai Aladdin Technology Co., Ltd., with the CAS number 66274-43-9; unless otherwise specified, the remaining raw materials and reagents were all conventional commercial products.

In the following examples, the specific test process of acid dissolution rate was as follows: 2g of an acid-soluble nanomaterial was put into an oven and dried to a constant weight, it was denoted as $m_1$, the dried acid-soluble nanomaterial was added into 250mL of hydrochloric acid solution having a concentration of 15wt%, stirred uniformly, applied a cap at a constant temperature of 90°C for 1h or 2h, the heating process was stopped, the residue was taken out and then filtered and dried till a constant weight, the dried residue was weighed, it was denoted as $m_2$, the acid dissolution rate S was then calculated according to the formula (I): [0083]

$$S=(m_1-m_2)/m_1\times 100\% \qquad \text{formula (I)},$$

wherein S denoted an acid dissolution rate (%); $m_1$ denoted the sample mass (g); and $m_2$ denoted the residue mass (g).

In order to verify whether the acid-soluble nanomaterial blocked the pore throats, the filtration loss of the fracturing fluid added with the acid-soluble nanomaterial was measured by a high-temperature high-pressure filtration loss tester, as for the specific measurement of filtration loss, a dense sandstone reservoir rock core was processed into a rock slab for carrying out a filtration loss experiment, the pore diameter of a sample was within the range of 0.01-20μm, and the detection process was performed with reference to an the China Petroleum Industry Standard SY/T5107-2016 "The evaluation measurement for properties of water-based fracturing fluid".

In order to verify the adsorption and occupation effects of the acid-soluble nanomaterial on sandstone to prevent acrylamide homopolymer in a fracturing fluid system from entering the sandstone pores, both the retention volume of the fracturing fluid after addition of the acid-soluble nanomaterial and the retention volume reduction rate before and after the addition of the acid-soluble nanomaterial were measured. The specific process was as follows: the sandstone sample was initially prepared into sandstone particles having a particle size of 0.21-0.3mm (70-50 mesh), and the sandstone particles was loaded into a sand-filled pipe, the sand-filled pipe rock core having a diameter of 2.5cm and a length of 15cm was dried and weighed; the solution (anionic polyacrylamide solution with a concentration of 1,000mg/L) was prepared, the acid-soluble nanomaterial was added and the displacement was performed at a rate of 1mL/min for 5h respectively, the concentration of the solution flowing out from the sample was measured by the starch-chromium iodide method, and the retention volume of polyacrylamide in the formation was calculated according to formula (II) by using the mass balance method;

$Q = (\rho_0 V_0 - \rho_1 V_1) / W$ formula (II), retention volume of polyacrylamide in the rock core, mg/g;

$\rho_0$ denoted the concentration of injected polyacrylamide solution, mg/L; $V_0$ denoted the volume of injected polyacrylamide, mL; $\rho_1$ denoted the concentration of sample discharging from an outlet of rock core, mg/L; $V_1$ denoted the volume of sample discharging from an outlet of rock core, mL; W denoted the dry mass of rock core, g.

The retention volume reduction rate referred to the ratio of the change in retention volume before and after the addition of the acid-soluble nanomaterial provided by the present invention (the addition amount of the acid-soluble nanomaterial added was preferably 0.5-2wt%) into the fracturing fluid and the initial retention volume of the fracturing fluid, the calculation formula was as shown in formula (III):

$$\Delta Q = \frac{Q_0 - Q_1}{Q_0} \times 100\% \qquad \text{formula (III)},$$

in formula (III):

$\Delta Q$ denoted the retention volume reduction rate of said fracturing fluid, %;
$Q_0$ denoted the retention volume before the addition of the acid-soluble nanomaterial provided by the present invention into the fracturing fluid, mg/g;
$Q_1$ denoted the retention volume after the addition of the acid-soluble nanomaterial provided by the present invention into the fracturing fluid, mg/g.

The testing method of the hydrodynamic particle diameter of molecular aggregate of the acid-soluble nanomaterial in water was as follows: the particle size of the modified calcium carbonate dispersed in water was measured by a wet method on the acid-soluble nanomaterial using a Fritsch 22 type laser particle size analyzer, the wet method testing was performed at the room temperature 20-25°C and normal pressure with reference to the liquid medium (e.g., water) dispersion and measurement method in the China National Standard GB/T19077-2016 "Particle size analysis - Laser diffraction methods"; the specific process was as follows: opened the test software MaScontrol and clicked the "washing" and "calibration" programs to wash and calibrate the instrument, then performed measurements; prepared the test sample, loaded the sample with a medicine spoon into a funnel in batches, dispersed the sample using clean water and ultrasonic wave, performed three sets of parallel data tests automatically after completion of the loading process, output the kinetic particle size distribution report of the test if the error was not more than 5%, cleaned and dried the instrument after completion of the test process, turned off the instrument, wherein the frequency of the laser particle size analyzer was 50-60HZ, and the pump speed was 40L/min.

Example 1

1) 16g of erucic acid and 14g of formic acid were placed in a four-mouth reaction bottle equipped with an electric stirrer, a thermometer, a dropping funnel and a condenser tube, the reaction bottle was put into a constant-temperature water bath, heated to 32°C under a stirring condition, 10g of hydrogen peroxide was then dropwise added at a constant speed, the system temperature was adjusted to the reaction temperature of 68°C, carried out the reaction for 5h, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 90g of nano-calcium carbonate raw material (powder) was dispersed by 200mL of anhydrous ethyl alcohol, the first product was further added, vibrated by an ultrasonic stirrer, stirred and reacted under the temperature condition of 65°C for 1h, filtered and dried to obtain a second product (multihydroxy erucic acid grafted nano-calcium carbonate);

2) 10g of p-toluene sulfonyl chloride was dissolved in 20mL of pyridine, stirred in ice bath, the second product with the total amount of 10g was added in a small amount of multiple times (about 0.5g each time), and subjected to the reaction for a total of 6h, a third product (p-toluene sulfonic acid alkyl ester grafted nano-calcium carbonate) was obtained; 28g of the third product and 10g of p-phenylenediamine were mixed in a sodium hydroxide solution with a concentration of 25wt% in the presence of a phase transfer catalyst of tetrabutyl ammonium bromide, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Example 2

1) 20g of erucic acid and 18g of formic acid were placed in a four-mouth reaction bottle equipped with an electric stirrer, a thermometer, a dropping funnel and a condenser tube, the reaction bottle was put into a constant-temperature water bath, heated to 35°C under a stirring condition, 10g of hydrogen peroxide was then dropwise added at a constant speed, the system temperature was adjusted to the reaction temperature of 70°C, carried out the reaction for 4 hours, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 100g of nano-calcium carbonate raw material (powder) was dispersed by 200mL of anhydrous ethyl alcohol, the first product was further added, vibrated by an ultrasonic stirrer, stirred and reacted under the temperature condition of 70°C for 0.5h, filtered and dried to obtain a second product (multihydroxy erucic acid grafted nano-calcium carbonate);

2) 10g of p-toluene sulfonyl chloride was dissolved in a sodium hydroxide solution with a concentration of 20wt%, stirred in ice bath, the second product with the total amount of 9g was added in a small amount of multiple times (about 0.4g each time), and subjected to the reaction for a total of 7h, a third product (p-toluene sulfonic acid alkyl ester grafted nano-calcium carbonate) was obtained; 24g of the third product and 10g of p-phenylenediamine were mixed in a sodium hydroxide solution with a concentration of 20wt% in the presence of a phase transfer catalyst of tetrabutyl ammonium bromide, magnetically stirred, heated to 95°C, refluxed, the reaction was performed for 12h, the reaction

product was subjected to drying, filtering and rotary evaporation, the modified nano-calcium carbonate material was obtained as the acid-soluble nanomaterial.

Example 3

1) 12g of erucic acid and 10g of formic acid were placed in a four-mouth reaction bottle equipped with an electric stirrer, a thermometer, a dropping funnel and a condenser tube, the reaction bottle was put into a constant-temperature water bath, heated to 30°C under a stirring condition, 10g of hydrogen peroxide was then dropwise added at a constant speed, the system temperature was adjusted to the reaction temperature of 65°C, carried out the reaction for 6 hours, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 80g of nano-calcium carbonate raw material (powder) was dispersed by 200mL of anhydrous ethyl alcohol, the first product was further added, vibrated by an ultrasonic stirrer, stirred and reacted under the temperature condition of 30°C for 1.5h, filtered and dried to obtain a second product (multihydroxy erucic acid grafted nano-calcium carbonate);
2) 10g of p-ethylbenzene sulfonyl chloride was dissolved in a sodium hydroxide solution with a concentration of 30wt%, stirred in ice bath, the second product with the total amount of 12g was added in a small amount of multiple times (about 0.6g each time), and subjected to the reaction for a total of 4h, a third product (p-ethylbenzene sulfonic acid alkyl ester grafted nano-calcium carbonate) was obtained; 30g of the third product and 10g of p-phenylenediamine were mixed in a sodium hydroxide solution with a concentration of 30wt% in the presence of a phase transfer catalyst of benzyltriethyl ammonium chloride, magnetically stirred, heated to 105°C, refluxed, the reaction was performed for 7h, the reaction product was subjected to drying, filtering and rotary evaporation, the modified nano-calcium carbonate material was obtained as the acid-soluble nanomaterial.

Example 4

The acid-soluble nanomaterial was prepared according to the method of Example 1, except that the erucic acid in step 1) was replaced by hexacosa-7-enoic acid.

Example 5

The acid-soluble nanomaterial was prepared according to the method of Example 1, except that the p-phenylenediamine in step 2) was replaced with 1,4-butanediamine.

Example 6

The acid-soluble nanomaterial was prepared according to the method of Example 1, except that step 1) was replaced with the following operations:

1) 16g of erucic acid, 14g of formic acid and 10g of hydrogen peroxide were placed in a four-mouth reaction bottle equipped with an electric stirrer, a thermometer, a dropping funnel and a condenser tube, the reaction bottle was put into a constant-temperature water bath, heated to the reaction temperature of 68°C under a stirring condition, carried out the reaction for 5h, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 90g of nano-calcium carbonate raw material (powder) was dispersed by 200mL of anhydrous ethyl alcohol, the first product was further added, vibrated by an ultrasonic stirrer, stirred and reacted under the room temperature (25°C) condition for 1h, filtered and dried to obtain a second product (multihydroxy erucic acid grafted nano-calcium carbonate).

Example 7

The acid-soluble nanomaterial was prepared according to the method of Example 1, except that step 2) was replaced with the following operations:
2) 10g of p-toluene sulfonyl chloride was dissolved in a sodium hydroxide solution with a concentration of 25wt%, stirred in

ice bath, and then mixed with 10g of a second product, and subjected to the reaction for 6h, a third product (p-toluene sulfonic acid alkyl ester grafted nano-calcium carbonate) was obtained; 28g of the third product and 10g of p-phenylenediamine were mixed in a sodium hydroxide solution with a concentration of 25wt% in the presence of a phase transfer catalyst of tetrabutyl ammonium bromide, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Example 8

The acid-soluble nanomaterial was prepared according to the method of Example 1, except that step 1) was replaced with the following operations:

1) 16g of erucic acid and 14g of formic acid were placed in a four-mouth reaction bottle equipped with an electric stirrer, a thermometer, a dropping funnel and a condenser tube, the reaction bottle was put into a constant-temperature water bath, heated to 32°C under a stirring condition, 10g of hydrogen peroxide was then dropwise added at a constant speed, the system temperature was adjusted to the reaction temperature of 55°C, carried out the reaction for 5h, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 90g of nano-calcium carbonate raw material (powder) was dispersed by 200mL of anhydrous ethyl alcohol, the first product was further added, vibrated by an ultrasonic stirrer, stirred and reacted under the room temperature (25°C) condition for 1h, filtered and dried to obtain a second product (multihydroxy erucic acid grafted nano-calcium carbonate).

Example 9

The acid-soluble nanomaterial was prepared according to the method of Example 1, except that step 2) was replaced with the following operations:
2) 10g of p-toluene sulfonyl chloride was dissolved in a sodium hydroxide solution with a concentration of 25wt%, stirred at the room temperature (25°C), the second product with the total amount of 10g was added in a small amount of multiple times (about 0.5g each time), and subjected to the reaction for a total of 6h, a third product (p-toluene sulfonic acid alkyl ester grafted nano-calcium carbonate) was obtained; 28g of the third product and 10g of p-phenylenediamine were mixed in a sodium hydroxide solution with a concentration of 25wt% in the presence of a phase transfer catalyst of tetrabutyl ammonium bromide, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Example 10

The acid-soluble nanomaterial was prepared according to the method of Example 1, except that step 2) was replaced with the following operations:
2) 10g of p-toluene sulfonyl chloride was dissolved in a sodium hydroxide solution with a concentration of 25wt%, stirred in ice bath, the second product with the total amount of 10g was added in a small amount of multiple times (about 0.5g each time), and subjected to the reaction for a total of 6h, a third product (p-toluene sulfonic acid alkyl ester grafted nano-calcium carbonate) was obtained; 28g of the third product and 10g of p-phenylenediamine were mixed in a sodium hydroxide solution with a concentration of 25wt%, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Example 11

The acid-soluble nanomaterial was prepared according to the method of Example 1, except that the nano-calcium carbonate raw material in step 1) was replaced with nano-magnesium carbonate raw material.

Example 12

The acid-soluble nanomaterial was prepared according to the method of Example 4, except that the nano-calcium carbonate raw material in step 1) was replaced with nano-magnesium carbonate raw material.

Example 13

The acid-soluble nanomaterial was prepared according to the method of Example 5, except that the nano-calcium carbonate raw material in step 1) was replaced with nano-magnesium carbonate raw material.

Comparative Example 1

16g of erucic acid and 14g of formic acid were placed in a four-mouth reaction bottle equipped with an electric stirrer, a thermometer, a dropping funnel and a condenser tube, the reaction bottle was put into a constant-temperature water bath, heated to 32°C under a stirring condition, 10g of hydrogen peroxide was then dropwise added at a constant speed, the system temperature was adjusted to the reaction temperature of 68°C, carried out the reaction for 5h, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product (white solid, multihydroxy erucic acid) was obtained; 90g of nano-calcium carbonate raw material (powder) was dispersed by 200mL of anhydrous ethyl alcohol, the first product was further added, vibrated by an ultrasonic stirrer, stirred and reacted under the temperature condition (65°C) for 1h, filtered and dried to obtain a second product (multihydroxy erucic acid grafted nano-calcium carbonate), which was used as an acid-soluble nanomaterial.

Comparative Example 2

90g of nano-calcium carbonate raw material (powder) was dispersed by 200mL of anhydrous ethyl alcohol, 16g of erucic acid was further added, then vibrated by an ultrasonic stirrer, stirred and reacted under the temperature condition of 65°C for 1h, filtered and dried to obtain a second product (erucic acid grafted nano-calcium carbonate), which was used as an acid-soluble nanomaterial.

Comparative Example 3

16g of erucic acid, 10g of hydrogen peroxide, 90g of nano-calcium carbonate raw material (powder), 10g of p-toluenesulfonyl chloride and 10g of p-phenylenediamine (exhibited a suspension, calcium carbonate floated on the surface of other liquid solutions) were physically mixed, the mixture was subjected to drying, filtering and rotary evaporation, a modified nano-calcium carbonate material was obtained, it was used as acid-soluble nanomaterial.

Comparative Example 4

90g of nano-calcium carbonate raw material (powder) was dispersed by 200mL of anhydrous ethyl alcohol, 10g of p-toluene sulfonyl chloride was dissolved in 20mL of pyridine, stirred in ice bath, an ethanol solution of calcium carbonate with the total amount of 10g was added in a small amount of multiple times (about 0.5g each time), and subjected to the reaction for a total of 6h, a first product was obtained; 28g of the first product and 10g of p-phenylenediamine were mixed in a sodium hydroxide solution with a concentration of 25wt% in the presence of a phase transfer catalyst of tetrabutyl ammonium bromide, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Comparative Example 5

1) 16g of octadecanoic acid and 14g of formic acid were placed in a four-mouth reaction bottle equipped with an electric stirrer, a thermometer, a dropping funnel and a condenser tube, the reaction bottle was put into a constant-temperature water bath, heated to 32°C under a stirring condition, 10g of hydrogen peroxide was then dropwise added at a constant speed, the system temperature was adjusted to the reaction temperature of 68°C, carried out the reaction for 5h, the reaction was subsequently stopped, a reaction solution I was obtained, the reaction solution was transferred into a separating funnel, a water layer was separated, and an oil layer was washed by hot water to be neutral, a small amount of acetone was added to dissolve out the oil layer, rotary evaporation was performed to remove water and a solvent, a first product was obtained; 90g of nano-calcium carbonate raw material (powder) was dispersed by 200mL of anhydrous ethyl alcohol, the first product was further added, vibrated by an ultrasonic stirrer, stirred and reacted under the temperature condition of 65°C for 1h, filtered and dried to obtain a first product (stearic

acid grafted nano-calcium carbonate);

2) 10g of p-toluene sulfonyl chloride was dissolved in 20mL of pyridine, stirred in ice bath, the first product with the total amount of 10g was added in a small amount of multiple times (about 0.5g each time), and subjected to the reaction for a total of 6h, a second product (p-toluene sulfonic acid alkyl ester grafted nano-calcium carbonate) was obtained; 28g of the second product and 10g of p-phenylenediamine were mixed in a sodium hydroxide solution with a concentration of 25wt% in the presence of a phase transfer catalyst of tetrabutyl ammonium bromide, magnetically stirred, heated to 100°C, refluxed, the reaction was performed for 10h, the reaction product was subjected to drying, filtering and rotary evaporation, the modified nano-calcium carbonate material was obtained as the acid-soluble nanomaterial.

Test Example 1

The fine powder of the modified nano-calcium carbonate material prepared in Example 1 was pressed by KBr into a sample, which was subjected to an infrared analysis with Shimadzu IRPrestige-21 type Fourier Infrared Spectrometer, and the measured infrared spectrum was shown in FIG. 1. FIG. 1 illustrated that the absorption peak of N-H in $-NH_2$ of phenylenediamine was presented at $3420cm^{-1}$, and the bending vibration peaks of -CH=CH- in benzene ring were presented at $1583cm^{-1}$, $1492cm^{-1}$ and $1400cm^{-1}$, which indicated that the modified nano-calcium carbonate material contained a phenylamine structure; in addition, the stretching vibration peaks of C=O and methylene $CH_2$ in the multihydroxy erucic acid were presented at $1700cm^{-1}$ and $2923cm^{-1}$ respectively, the absorption peak of -OH in the multihydroxy erucic acid partially overlapped with a peak of N-H; moreover, the characteristic absorption peaks of $CaCO_3$ were mainly presented at $1700cm^{-1}$, $1460cm^{-1}$, $875cm^{-1}$ and $715cm^{-1}$ respectively. It demonstrated that that the modified nano-calcium carbonate material finally prepared in Example 1 contained calcium carbonate particles and was grafted with a modifier having fatty acid carbon chains and amino groups.

The fine powder of the modified nano-calcium carbonate material prepared in Example 1 was subjected to drying and irradiation with an infrared lamp, a small amount of the acid-soluble nanomaterial was taken and placed on a conductive adhesive tape disposed on a copper tray, lightly pressed with a lintless paper to firmly adhere the sample particles, and the powder sample on the side of the copper tray was removed; the sample was loaded in a device, vacuumized, and the electrical conduction was performed, the morphology and elemental analysis on the sample powder were then implemented by using a Quanta 250 scanning electron microscope, the morphology and the EDS energy spectrogram of the modified calcium carbonate provided by the invention were shown in FIG. 2, compared with the calcium carbonate particle morphology and the EDS energy spectrogram shown in FIG. 3, the modifier was obviously attached to the surface of calcium carbonate particles, the EDS energy spectrogram indicated that the modified nano-calcium carbonate contained element N, and the content of amino group can be calculated according to the content of element N.

The contents of carbon chain and amino group in the acid-soluble nanomaterial obtained in Examples 1-13 and Comparative Examples 1-5 were measured using a combination of infrared detection and scanning electron microscopy, and the results were shown in Table 2.

FIG. 4 illustrated an observation photograph showing an optical microscope view of an aqueous solution of the modified nano-calcium carbonate material prepared in Example 1, the particles of the modified calcium carbonate were formed by the agglomeration of a plurality of tiny microcrystals, and the particles were uniformly distributed.

FIG. 5 illustrated an observation photograph showing an optical microscope view of the unmodified nano-calcium carbonate particles; FIG. 6 illustrated an observation photograph showing an optical microscope view of an aqueous solution of unmodified nano-calcium carbonate particles, the nano-calcium carbonate particles had uniform size under the dry powder state; after water was added, the mixture was in an agglomerated state, but the sizes were inconsistent and the distribution was not uniform.

The molecular aggregate molecular diameters $D_{10}$, $D_{20}$, $D_{50}$, $D_{70}$ and $D_{90}$ of the acid-soluble nanomaterial obtained in Examples 1-13 and Comparative Examples 1-5 in water were tested, the nano-calcium carbonate raw material was used as a control group, the results were shown in Table 1. The acid solubility of the acid-soluble nanoparticles obtained in Examples -13 and Comparative Examples 1-5 was tested with reference to calcium carbonate raw material and magnesium carbonate raw materials, the results were shown in Table 2.

Table 1

| No. | $D_{10}$/μm | $D_{20}$/μm | $D_{50}$/μm | $D_{70}$/μm | $D_{90}$/μm |
|---|---|---|---|---|---|
| Example 1 | 2.7 | 4.9 | 9.2 | 13.5 | 25.4 |
| Example 2 | 3.6 | 5.3 | 8.7 | 15.4 | 28.3 |
| Example 3 | 6.3 | 9.6 | 17.4 | 27.6 | 30.5 |
| Example 4 | 5.7 | 10.6 | 24.4 | 33.6 | 42.5 |

(continued)

| No. | $D_{10}$/μm | $D_{20}$/μm | $D_{50}$/μm | $D_{70}$/μm | $D_{90}$/μm |
|---|---|---|---|---|---|
| Example 5 | 2.5 | 17.3 | 30.2 | 41.5 | 58.3 |
| Example 6 | 8.2 | 19.7 | 29.6 | 38.3 | 53.4 |
| Example 7 | 8.9 | 18.7 | 28.3 | 54.2 | 63.2 |
| Example 8 | 8.3 | 12.6 | 19.7 | 66.1 | 84.4 |
| Example 9 | 9.5 | 14.5 | 23.7 | 35.7 | 42.5 |
| Example 10 | 3.4 | 4.5 | 8.7 | 13 | 22.5 |
| Example 11 | 3.0 | 4.1 | 8.6 | 10.8 | 20.7 |
| Example 12 | 4.5 | 10.9 | 23.2 | 33.9 | 49.7 |
| Example 13 | 4.9 | 11.9 | 30.4 | 43.2 | 54.9 |
| Comparative Example 1 | 18.7 | 24 | 31.5 | 40.7 | 51.6 |
| Comparative Example 2 | 54.6 | 82.1 | 120.2 | 138.9 | 155.8 |
| Comparative Example 3 | - | - | - | - | - |
| Comparative Example 4 | 20.3 | 40.1 | 55.6 | 77.8 | 98.5 |
| Comparative Example 5 | 30.5 | 42.9 | 63.2 | 87.5 | 100.3 |
| Calcium carbonate raw material | floats on the liquid level, and the particle size cannot be measured | | | | |
| Magnesium carbonate raw material | floats on the liquid level, and the particle size cannot be measured | | | | |

Table 2

| No. | Carbon chain content /wt% | Amino content /wt% | Acid solubility when dissolved in a hydrochloric acid solution at 90°C for 1h /% | Acid solubility when dissolved in a hydrochloric acid solution at 90°C for 2h /% |
|---|---|---|---|---|
| Example 1 | 7.82 | 0.55 | 74 | 100 |
| Example 2 | 8.17 | 0.48 | 78 | 100 |
| Example 3 | 7.09 | 0.39 | 78 | 95 |
| Example 4 | 10.32 | 0.41 | 80 | 98 |
| Example 5 | 11.53 | 0.26 | 75 | 100 |
| Example 6 | 13.45 | 0.19 | 67 | 92 |
| Example 7 | 14.56 | 0.05 | 68 | 96 |
| Example 8 | 9.24 | 0.43 | 71 | 94 |
| Example 9 | 10.35 | 0.06 | 71 | 100 |
| Example 10 | 13.45 | 0.09 | 66 | 98 |
| Example 11 | 8.23 | 0.53 | 68 | 100 |
| Example 12 | 13.29 | 0.38 | 72 | 98 |
| Example 13 | 13.58 | 0.23 | 70 | 99 |
| Comparative Example 1 | 20.31 | 0 | 73 | 100 |
| Comparative Example 2 | 24.20 | 0 | 65 | 90 |
| Comparative Example 3 | 2.35 | 0 | 100 | 100 |
| Comparative Example 4 | 0 | 0 | 100 | 100 |
| Comparative Example 5 | 20.12 | 0.04 | 77 | 91 |

(continued)

| No. | Carbon chain content /wt% | Amino content /wt% | Acid solubility when dissolved in a hydrochloric acid solution at 90°C for 1h /% | Acid solubility when dissolved in a hydrochloric acid solution at 90°C for 2h /% |
|---|---|---|---|---|
| Calcium carbonate raw material | 0 | 0 | 100 | 100 |
| Magnesium carbonate raw material | 0 | 0 | 100 | 100 |

Test Example 2

Step 1) 0.1g of polyacrylamide having a weight average molecular weight of 18,000,000 (purchased from Dongying Spring Petroleum Engineering Technology Co., Ltd., product model was thickener SPR-08) was added into 99.7g of clean water, the adding rate was controlled during the addition process to prevent the formation of fish eyes, and the rotating speed was adjusted constantly to ensure the whirlpool condition until it was sufficiently dissolved to form a homogeneous solution; 0.1g of oleylamine polyoxyethylene ether (purchased from Dongying Spring Petroleum Engineering Technology Co., Ltd., product model was cleanup additive SPR-201) and 0.1g of dimethylamine quaternary ammonium salt (purchased from Dongying Spring Petroleum Engineering Technology Co., Ltd., product model was clay stabilizer SPR-103) were further added, and stirred uniformly.

Step 2) the stirring state was maintained, 0.5g of the acid-soluble nanomaterials prepared in Examples 1-13 was added into the solution obtained in step 1) respectively, and stirred uniformly, a fracturing fluid was obtained.

Test Example 3

Step 1) 0.1g of polyacrylamide having a weight average molecular weight of 18,000,000 (purchased from Dongying Spring Petroleum Engineering Technology Co., Ltd., product model was thickener SPR-08) was added into 99.7g of clean water, the adding rate was controlled during the addition process to prevent the formation of fish eyes, and the rotating speed was adjusted constantly to ensure the whirlpool condition until it was sufficiently dissolved to form a homogeneous solution; 0.1g of oleylamine polyoxyethylene ether (purchased from Dongying Spring Petroleum Engineering Technology Co., Ltd., product model was cleanup additive SPR-201) and 0.1g of dimethylamine quaternary ammonium salt (purchased from Dongying Spring Petroleum Engineering Technology Co., Ltd., product model was clay stabilizer SPR-103) were further added, and stirred uniformly.

Step 2) the stirring state was maintained, 2g of the acid-soluble nanomaterial prepared in Example 1 was added into the solution obtained in step 1), and stirred uniformly, a fracturing fluid was obtained.

Test Example 4

A fracturing fluid was prepared according to the method of Test Example 3, except that the dosage of said acid-soluble nanomaterial prepared in Example 1 in step 2) was replaced with 1.5 g.

Comparative Test Example 1

A fracturing fluid was prepared according to the method of Test Example 2, except that 0.5g of the acid-soluble nanomaterial prepared in Example in step 2) was replaced with 0.5g of the acid-soluble nanomaterial prepared in Comparative Example 1.

Comparative Test Example 2

A fracturing fluid was prepared according to the method of Test Example 2, except that 0.5g of the acid-soluble nanomaterial prepared in Example in step 2) was replaced with 0.5g of the acid-soluble nanomaterial prepared in Comparative Example 2.

Comparative Test Example 3

A fracturing fluid was prepared according to the method of Test Example 2, except that 0.5g of the acid-soluble nanomaterial prepared in Example in step 2) was replaced with 0.5g of the acid-soluble nanomaterial prepared in

Comparative Example 3.

Since the materials in Comparative Example 3 were subjected to physical mixing and then subjected to filtering, drying and rotary evaporation, the calcium carbonate powder to which only a part of erucic acid was adhered can be obtained, the calcium carbonate powder was still in a floating state when dissolved in a solvent water, a fracturing fluid system cannot be obtained, thus the fracturing filtration loss and retention volume cannot be effectively detected.

Comparative Test Example 4

A fracturing fluid was prepared according to the method of Test Example 2, except that 0.5g of the acid-soluble nanomaterial prepared in Example in step 2) was replaced with 0.5g of the acid-soluble nanomaterial prepared in Comparative Example 4.

Comparative Test Example 5

A fracturing fluid was prepared according to the method of Test Example 2, except that 0.5g of the acid-soluble nanomaterial prepared in Example in step 2) was replaced with 0.5g of the acid-soluble nanomaterial prepared in Comparative Example 5.

Comparative Test Example 6

A fracturing fluid was prepared according to the method of Test Example 2, except that 0.5g of the acid-soluble nanomaterial prepared in Example was not added in step 2).

The fracturing fluid prepared from Comparative Test Example 6 was used as the original fracturing fluid.

The filtration loss, retention volume and retention volume reduction rate of fracturing fluids corresponding to the acid-soluble nanoparticles obtained in Test Examples 2-4 and Comparative Test Examples 1-6 were measured, and the results were shown in Table 3.

Table 3

| No. | Fracturing fluid filtration loss, mL | Fracturing fluid retention volume, mg/g | Retention volume reduction rate, % |
|---|---|---|---|
| Test Example 2 (Example 1) | 7.0 | 7.8 | 37.6 |
| Test Example 2 (Example 2) | 7.4 | 8.4 | 32.8 |
| Test Example 2 (Example 3) | 7.7 | 9.1 | 27.2 |
| Test Example 2 (Example 4) | 8.5 | 9 | 28 |
| Test Example 2 (Example 5) | 8.3 | 9.3 | 25.6 |
| Test Example 2 (Example 6) | 9.9 | 11.2 | 10.4 |
| Test Example 2 (Example 7) | 9.8 | 11.9 | 4.8 |
| Test Example 2 (Example 8) | 8.0 | 8.9 | 28.8 |
| Test Example 2 (Example 9) | 10.2 | 11.6 | 7.2 |
| Test Example 2 (Example 10) | 9.5 | 11.7 | 6.4 |
| Test Example 2 (Example 11) | 7.5 | 8.3 | 33.6 |
| Test Example 2 (Example 12) | 8.4 | 6.6 | 47.2 |
| Test Example 2 (Example 13) | 8.6 | 6.3 | 49.6 |
| Test Example 2 (calcium carbonate raw material) | has serious agglomeration phenomenon, cannot be dispersed uniformly, and compatibility cannot be reached | | |
| Test Example 2 (magnesium carbonate raw material) | has serious agglomeration phenomenon, cannot be dispersed uniformly, and compatibility cannot be reached | | |
| Test Example 3 | 8.8 | 6.2 | 50.4 |
| Test Example 4 | 8.5 | 6.5 | 48 |
| Comparative Test Example 1 | 7.0 | 12.3 | 1.6 |

(continued)

| No. | Fracturing fluid filtration loss, mL | Fracturing fluid retention volume, mg/g | Retention volume reduction rate, % |
|---|---|---|---|
| Comparative Test Example 2 | 11.0 | 12.1 | 3.2 |
| Comparative Test Example 3 | / | / | / |
| Comparative Test Example 4 | 19.8 | 12.7 | -1.6 |
| Comparative Test Example 5 | 12.9 | 12.2 | 2.4 |
| Original fracturing fluid | 20.1 | 12.5 | 0 |

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. An acid-soluble nanomaterial, is **characterized in that** the hydrodynamic particle diameter $D_{10}$ of molecular aggregates of the acid-soluble nanomaterial in water is 2-10 μm, $D_{50}$ is 8-31μm, and $D_{90}$ is 20-90μm.

2. The acid-soluble nanomaterial according to claim 1, wherein the acid-soluble nanomaterial has an acid solubility within the range of 50-80% when dissolved in a hydrochloric acid solution having a concentration of 15wt% at 90°C for 1 hour and an acid solubility of 90% or more when dissolved in the hydrochloric acid solution at 90°C for 2 hours.

3. The acid-soluble nanomaterial according to claim 1 or 2, wherein the hydrodynamic particle diameter $D_{20}$ of molecular aggregates of the acid-soluble nanomaterial in water is 4-22μm and $D_{70}$ is 12-70μm.

4. The acid-soluble nanomaterial according to any one of claims 1-3, wherein the acid-soluble nanomaterial comprises carbonate particles and a modifying agent attached to the surface of said carbonate particles, wherein the carbonate particles comprise calcium carbonate particles and/or magnesium carbonate particles, wherein the modifying agent comprises a derivative formed by substituting at least one hydroxyl group of a multihydroxy fatty acid with an amino group-containing substituent.

5. The acid-soluble nanomaterial according to claim 4, wherein the acid-soluble nanomaterial has a retention volume reduction rate more than 4.5%, preferably more than 25% for a fracturing fluid having a retention volume of 12.5mg/g and comprising 99.7wt% of a solvent + 0.1wt% of a thickener + 0.1wt% of a cleanup additive + 0.1wt% of a clay stabilizer.

6. The acid-soluble nanomaterial according to claim 4 or 5, wherein the modifier has a structural formula represented by formula (I) and a carbon chain length of 20 or more,

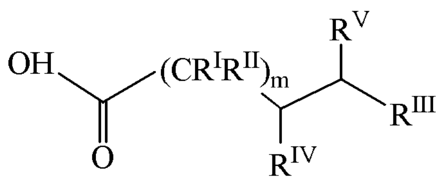

(I),

wherein $R^{I}$ and $R^{II}$ are each independently hydrogen or C1-C3 alkyl, $R^{III}$ is hydrogen or C1-C20 alkyl, and m is an integer of 0-20; one of $R^{IV}$ and $R^{V}$ is an amino-containing substituent and the other is hydroxyl, or both are amino-containing substituents;
preferably, the content of said carbon chain in the modifier is within the range of 5-15wt%, and the content of said amino group in the modifier is within the range of 0.05-0.6wt%, based on the total amount of the acid-soluble

nanomaterial.

**7.** A preparation method for the acid-soluble nanomaterial, is **characterized in that** the method comprises the following steps: subjecting an unsaturated fatty monoacid to a hydroxylation treatment and then subjecting to a contact reaction with a nano-carbonate raw material; performing an amination treatment on a product of the contact reaction, wherein the nano-carbonate raw material comprises a nano-calcium carbonate raw material and/or a nano-magnesium carbonate raw material.

**8.** The preparation method according to claim 7, wherein the unsaturated fatty monoacid has a structural formula represented by formula (II) and a carbon chain length of 20 or more,

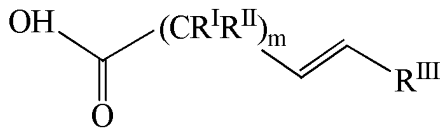

(II),

wherein $R^I$ and $R^{II}$ are each independently hydrogen or C1-C3 alkyl, $R^{III}$ is hydrogen or C1-C20 alkyl, and m is an integer of 0-20;
the hydroxylation treatment process comprises: mixing the unsaturated fatty monoacid with a hydroxylation reagent and carrying out the reaction in the presence of a C1-C5 organic acid;
preferably, the hydroxylation reagent is a peroxide, more preferably hydrogen peroxide;
the weight ratio of said unsaturated fatty monoacid, said C1-C5 organic acid and said hydroxylation reagent is (1-2) : (1-2) : 1.

**9.** The preparation method according to claim 8, wherein the mixing reaction comprises: mixing the unsaturated fatty monoacid with a C1-C5 organic acid, then dropwise adding a hydroxylation reagent at the temperature condition of 30-35°C, further heating to 65-70°C and carrying out the reaction for 4-6 h.

**10.** The preparation method according to any one of claims 7-9, wherein the weight ratio of said unsaturated fatty monomer following the hydroxylation treatment to said nano-carbon raw material is 1: (4-8);
preferably, the contact reaction conditions comprise: a temperature of 30-70°C and a time of 0.5-1.5h.

**11.** The preparation method according to any one of claims 7-10, wherein the animation treatment process comprises: carrying out a first-stage reaction on the contact reaction product and an aromatic sulfonyl halide, and then carrying out a second-stage reaction with diamine in the presence of a catalyst;

preferably, the aromatic sulfonyl halide is benzene-containing sulfonyl chloride, more preferably at least one selected from the group consisting of p-toluene sulfonyl chloride, p-ethylbenzene sulfonyl chloride, m-toluene sulfonyl chloride and m-ethylbenzene sulfonyl chloride;
the diamine is at least one selected from the group consisting of p-phenylene diamine, m-phenylene diamine, 4,4'-diamino diphenyl ether, 2,2'-bis (trifluoromethyl) diamino biphenyl and 4,4'-diamino diphenyl sulfone;
the catalyst is a phase transfer catalyst, more preferably tetrabutyl ammonium bromide and/or benzyl triethyl ammonium chloride;
preferably, the weight ratio of said aromatic sulfonyl halide to said contact reaction product is 1 : (0.8-1.2), and the weight ratio of the first-stage reaction product to the diamine is (2.4-3) : 1.

**12.** The preparation method according to claim 11, wherein the first stage reaction comprises: adding the contact reaction product into a solution containing the aromatic sulfonyl halide in batches for carrying out the reaction; the conditions of the first stage reaction comprise: a temperature from -5°C to 5°C, and a time of 4-7 hours; preferably, the conditions of the second stage reaction comprise: using a strong alkali solution having a concentration of 20-30wt% as a reaction solvent, a temperature of 95-105°C, and a time of 7-12h.

**13.** Use of the acid-soluble nanomaterial according to any one of claims 1-6 or the acid-soluble nanomaterial produced with the method according to any one of claims 7-12 in an oil extraction working fluid, preferably the use as a plugging agent in the fracturing fluid.

**14.** A fracturing fluid comprising the acid-soluble nanomaterial according to any one of claims 1-6 or the acid-soluble

nanomaterial produced with the method according to any one of claims 7-12.

**15.** The fracturing fluid according to claim 14, wherein the acid-soluble nanomaterial is contained in an amount of 0.5-2wt%, based on the total weight of the fracturing fluid.

**16.** The fracturing fluid according to claim 14 or 15, wherein the fracturing fluid further comprises: 0.1-1wt% of a thickener, 0.1-1wt% of a cleanup additive, and 0.1-1wt% of a clay stabilizer, based on the total weight of said fracturing fluid;

preferably, the thickener is an acrylamide homopolymer and/or a copolymer of acrylamide and other monomer, wherein the other monomer is at least one selected from the group consisting of acryloyloxy ethyl trimethyl ammonium chloride, sodium acrylate and acrylic acid; further preferably, the copolymer of acrylamide and other monomer is at least one selected from the group consisting of acrylamide-acryloyloxy ethyl trimethyl ammonium chloride copolymer, acrylamide-sodium acrylate-acrylic acid copolymer, and acrylamide-acryloyloxy ethyl trimethyl ammonium chloride-sodium acrylate-acrylic acid copolymer;
preferably, the cleanup additive is polyoxyethylene amine ether and/or polyoxyethylene fatty alcohol ether;
preferably, the polyoxyethylene amine ether is oleylamine polyoxyethylene ether and/or rosin amine polyoxyethylene ether; the polyoxyethylene fatty alcohol ether is at least one selected from the group consisting of polyoxyethylene dodecyl ether, polyoxyethylene tetradecyl ether, polyoxyethylene hexadecyl ether, and polyoxyethylene octadecyl ether;
preferably, the clay stabilizer is a dimethylamine quaternary ammonium salt and/or a polyquaternium.

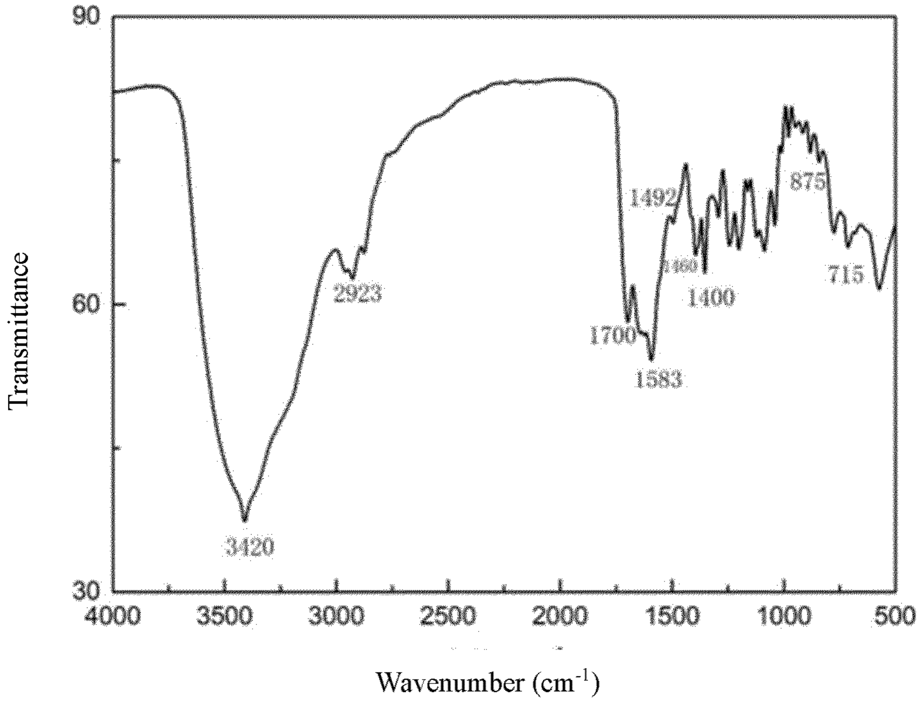
90
60
30
Transmittance
4000
3500
3000
2500
2000
1500
1000
500
Wavenumber (cm-1)
3420
2923
1700
1583
1492
1460
1400
875
715

FIG. 1

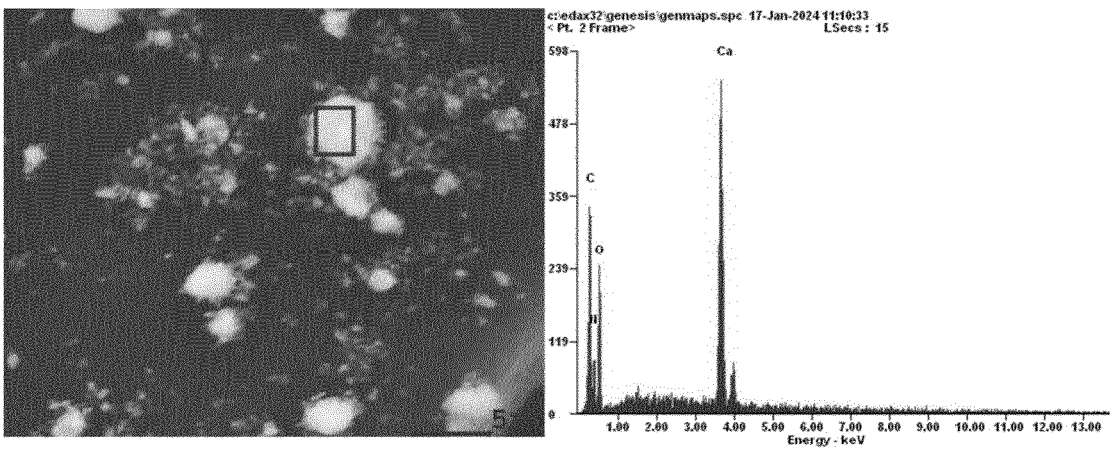
c:\edax32\genesis\genmaps.spc 17-Jan-2024 11:10:33
< Pt. 2 Frame>
LSecs : 15
598
478
359
239
119
0
Ca
C
O
N
1.00
2.00
3.00
4.00
5.00
6.00
7.00
8.00
9.00
10.00
11.00
12.00
13.00
Energy - keV

FIG. 2

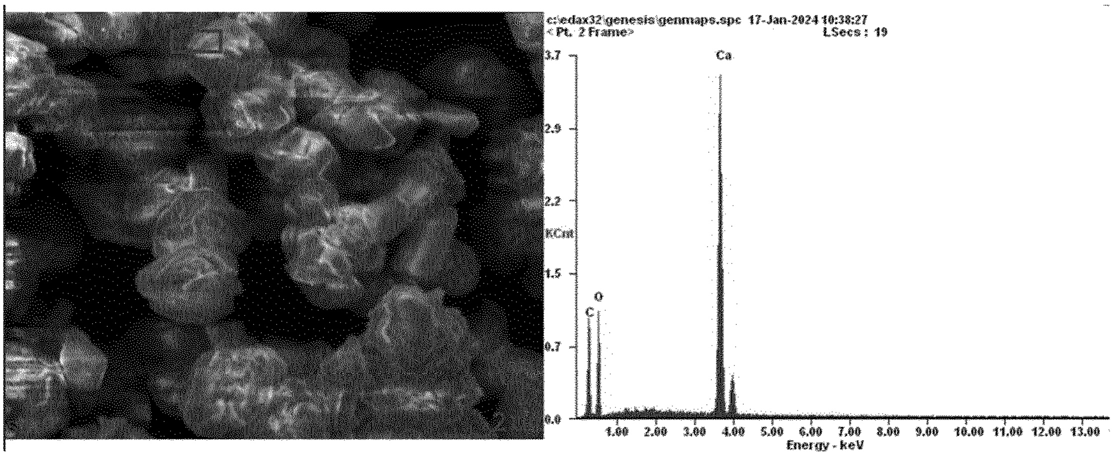
c:\edax32\genesis\genmaps.spc 17-Jan-2024 10:38:27
< Pt. 2 Frame>
LSecs : 19
3.7
2.9
2.2
KCnt
1.5
0.7
0.0
Ca
C
O
1.00 2.00 3.00 4.00 5.00 6.00 7.00 8.00 9.00 10.00 11.00 12.00 13.00
Energy - keV

FIG. 3

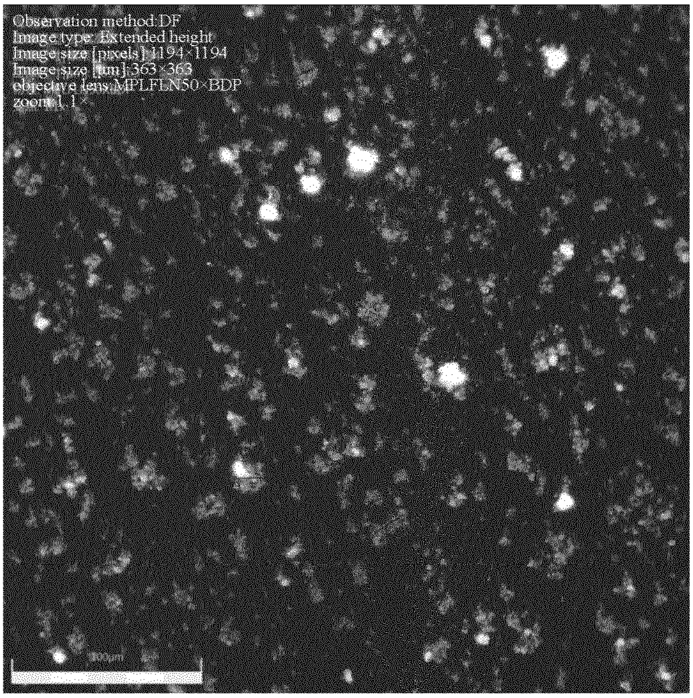
Observation method:DF
Image type: Extended height
Image size [pixels]:1194×1194
Image size [μm]:363×363
objective lens:MPLFLN50×BDP
zoom:1.1×

FIG. 4

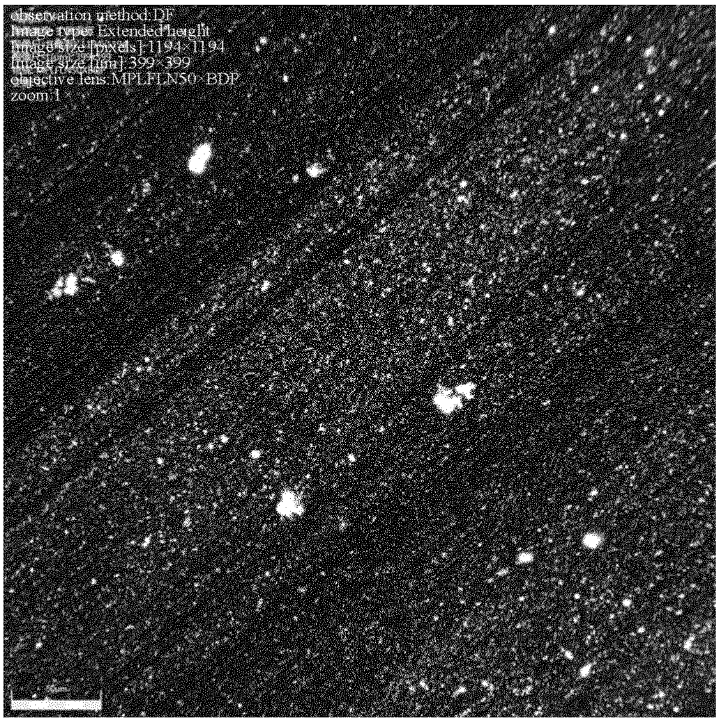
observation method:DF
Image type: Extended height
Image size [pixels]:1194×1194
Image size [μm]:399×399
objective lens:MPLFLN50×BDP
zoom:1×
50μm

FIG. 5

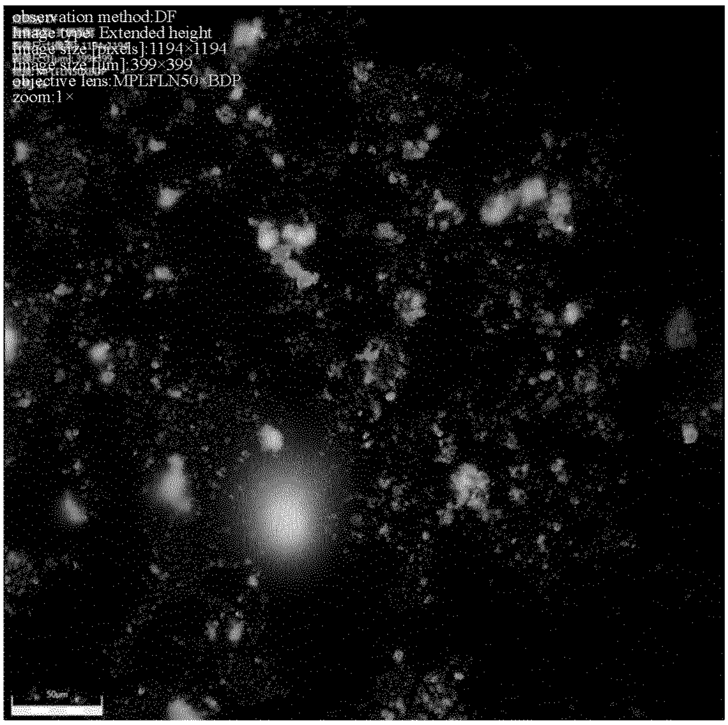
observation method:DF
Image type: Extended height
Image size [pixels]:1194×1194
Image size [μm]:399×399
objective lens:MPLFLN50×BDP
zoom:1×
50μm

FIG. 6

**INTERNATIONAL SEARCH REPORT**

International application No. **PCT/CN2024/096767**

**A. CLASSIFICATION OF SUBJECT MATTER**

C09K8/66(2006.01)i; C09K8/68(2006.01)i; C09K8/506(2006.01)i; C01F11/18(2006.01)i

According to International Patent Classification (IPC) or to both national classification and IPC

**B. FIELDS SEARCHED**

Minimum documentation searched (classification system followed by classification symbols)

IPC:C09K8/-; C01F11/-

Documentation searched other than minimum documentation to the extent that such documents are included in the fields searched

Electronic data base consulted during the international search (name of data base and, where practicable, search terms used)

CNTXT, ENTXT, CNKI, ISI, DWPI: 压裂液, 封堵, 暂堵, 碳酸镁, 碳酸钙, 纳米, D10, D50, D90, 芥酸, 烯酸, 胺, 氨基, fracturing fluid, plugging, blocking, magnesium carbonate, calcium carbonate, nanometer, nano, docosenoic acid, olefine acid, amine, amino

**C. DOCUMENTS CONSIDERED TO BE RELEVANT**

| Category* | Citation of document, with indication, where appropriate, of the relevant passages | Relevant to claim No. |
|---|---|---|
| A | US 2023201126 A1 (OMYA INTERNATIONAL AG) 29 June 2023 (2023-06-29)<br>description, paragraphs 0319-0320 and 0329 | 1-16 |
| A | CN 112940697 A (CHENGDU ZESAIPU PETROLEUM ENGINEERING TECHNOLOGY SERVICE CO., LTD.) 11 June 2021 (2021-06-11)<br>description, paragraphs 0006-0019 | 1-16 |
| A | CN 116790235 A (XI'AN SHIYOU UNIVERSITY) 22 September 2023 (2023-09-22)<br>description, paragraphs 0007-0054 | 1-16 |
| A | CN 115772397 A (CHINA PETROLEUM & CHEMICAL CORPORATION et al.) 10 March 2023 (2023-03-10)<br>entire description | 1-16 |
| A | US 2009162638 A1 (BURI, Matthias et al.) 25 June 2009 (2009-06-25)<br>entire description | 1-16 |

☐ Further documents are listed in the continuation of Box C. ☑ See patent family annex.

* Special categories of cited documents:

"A" document defining the general state of the art which is not considered to be of particular relevance

"D" document cited by the applicant in the international application

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **26 September 2024** | **09 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/096767**

| Patent document cited in search report | | | Publication date (day/month/year) | Patent family member(s) | | | Publication date (day/month/year) |
|---|---|---|---|---|---|---|---|
| US | 2023201126 | A1 | 29 June 2023 | EP | 3928859 | A1 | 29 December 2021 |
| | | | | WO | 2021259777 | A1 | 30 December 2021 |
| | | | | EP | 4168171 | A1 | 26 April 2023 |
| | | | | CN | 115916392 | A | 04 April 2023 |
| CN | 112940697 | A | 11 June 2021 | None | | | |
| CN | 116790235 | A | 22 September 2023 | CN | 116790235 | B | 09 August 2024 |
| CN | 115772397 | A | 10 March 2023 | CN | 115772397 | B | 24 September 2024 |
| US | 2009162638 | A1 | 25 June 2009 | TW | 200815528 | A | 01 April 2008 |
| | | | | TWI | 353373 | B | 01 December 2011 |
| | | | | PT | 2029675 | E | 10 April 2012 |
| | | | | DE | 102006026965 | A1 | 13 December 2007 |
| | | | | ATE | 539125 | T1 | 15 January 2012 |
| | | | | RS | 20090203 | A | 30 June 2010 |
| | | | | AU | 2007255462 | A1 | 13 December 2007 |
| | | | | AU | 2007255462 | B2 | 05 July 2012 |
| | | | | CA | 2653776 | A1 | 13 December 2007 |
| | | | | CA | 2653776 | C | 16 February 2016 |
| | | | | WO | 2007141260 | A1 | 13 December 2007 |
| | | | | JP | 2009540035 | A | 19 November 2009 |
| | | | | JP | 5662679 | B2 | 04 February 2015 |
| | | | | ZA | 200809507 | B | 25 November 2009 |
| | | | | MX | 2008015688 | A | 02 March 2009 |
| | | | | KR | 20090016602 | A | 16 February 2009 |
| | | | | KR | 101343458 | B1 | 20 December 2013 |
| | | | | NO | 20085307 | L | 06 March 2009 |
| | | | | NO | 340273 | B1 | 27 March 2017 |
| | | | | HRP | 20090291 | A2 | 31 August 2009 |
| | | | | HRP | 20090291 | A8 | 31 October 2009 |
| | | | | AR | 061137 | A1 | 06 August 2008 |
| | | | | DK | 2029675 | T3 | 16 April 2012 |
| | | | | SI | 2029675 | T1 | 29 June 2012 |
| | | | | PL | 2029675 | T3 | 31 May 2012 |
| | | | | ZA | 200810089 | B | 25 November 2009 |
| | | | | US | 2011237730 | A1 | 29 September 2011 |
| | | | | US | 8349939 | B2 | 08 January 2013 |
| | | | | RU | 2009100060 | A | 20 July 2010 |
| | | | | RU | 2448995 | C2 | 27 April 2012 |
| | | | | HK | 1130826 | A1 | 08 January 2010 |
| | | | | EP | 2029675 | A1 | 04 March 2009 |
| | | | | EP | 2029675 | B1 | 28 December 2011 |
| | | | | ES | 2381700 | T3 | 30 May 2012 |
| | | | | US | 8329289 | B2 | 11 December 2012 |
| | | | | BRPI | 0713100 | A2 | 16 October 2012 |
| | | | | CL | 2007001612 | A1 | 18 April 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202410154420
- GB T190772016 A


### Non-patent literature cited in the description


- *CHEMICAL ABSTRACTS*, 112-86-7
- *CHEMICAL ABSTRACTS*, 66274-43-9